# EUROPEAN PATENT SPECIFICATION

(11) **EP 3 195 314 B1**
(45) Date of publication and mention of the grant of the patent: **08.12.2021**
(21) Application number: 15839496.5
(22) Date of filing: 14.07.2015
(51) Int. Cl.: G10L 25/78

(54) **METHODS AND APPARATUS FOR UNSUPERVISED WAKEUP**
VERFAHREN UND VORRICHTUNG FÜR UNÜBERWACHTES AUFWECKEN
PROCÉDÉS ET APPAREIL POUR ACTIVATION NON SUPERVISÉE

(30) Priority: 11.09.2014 US 201414483282; 11.09.2014 US 201414483285
(43) Date of publication of application: 26.07.2017
(73) Proprietor: Cerence Operating Company, Burlington, MA 01803 (US)
(72) Inventor: BANSAL, Dhananjay, Belmont, Massachusetts 02478 (US); NEWMAN, Michael J., Somerville, Massachusetts 02143 (US); VAN MULBREGT, Paul, Wayland, Massachusetts 01778 (US)
(74) Representative: South, Nicholas Geoffrey
(86) International application number: PCT/US2015/040341
(87) International publication number: WO 2016/039847

(56) References cited:
- US-A- 5 465 317
- US-A- 5 737 724
- US-A- 5 794 194
- US-A1- 2003 040 907
- US-A1- 2005 071 161
- US-A1- 2005 080 627
- US-A1- 2014 249 817
- US-B1- 6 697 782
- None

## Description

### BACKGROUND

As is known in the art, computer speech recognition (a.k.a., automatic speech recognition or ASR) is the process of automatically converting spoken words into text by a computer. Illustrative applications of ASR include speech transcription, speech translation, voice control of devices, etc. Speech recognition systems operate by matching the acoustics with acoustic signatures of words. These acoustic signatures, also known as acoustic models, are trained using a large amount of training data. Generally, this training data is collected from a large number of different speakers to make an ASR system that can recognize audio from a wide range of speakers (a.k.a. speaker independent ASR system). It is known that such generic acoustic models, though performing well on a wide range of users, may not perform as well on a given user compared to an acoustic model trained over just that user. To match the acoustic model to a specific user, in practice, an ASR system may adapt its generic acoustic model using a small amount of audio data from a target speaker to create a speaker specific acoustic model that performs significantly better than a generic acoustic model. This process is referred to as acoustic model adaptation or speaker adaptation.

Acoustic model adaptation can be performed as supervised or unsupervised. In both cases, the ASR system uses audio files from the target user(s) and corresponding transcriptions. In supervised adaptation, the correctness of the transcription is verified by a human, explicitly or implicitly. In unsupervised model adaptation, the system uses a transcription that is automatically generated without explicit human verification. In unsupervised adaptation, the transcription may be incorrect, and adapting on incorrect transcription can potentially degrade performance. Minimizing incorrect adaptation is one challenge for unsupervised adaptation.

Today, one application of speech recognition technology is to allow voice commands to "wake up" a "sleeping" device. Some of today's devices, such as smartphones and televisions, are designed to enter a sleep mode to conserve power when not actively used for some period of time. Once such devices go into sleep mode, they must be first "woken up" to perform a task, such as making a call in case of a smartphone, or showing a particular channel in case of a television. Traditionally, a device is woken up using a press of a button. In voice-based wakeup, a device can be woken up using a voice command. The advantage of using voice to wake up a device is that the user does not need to physically locate and touch the device. For example, for a television, the user can just say "Wake up TV" and the television wakes up, and then the user can say "Show CNN" without the user having to power on the television explicitly. In this case, "Wake up TV" is the wakeup phrase.

In a voice-based wakeup task the device, though sleeping, is constantly listening to the ambient audio for a pre-specified phrase or set of wakeup phrases. When the device detects a wakeup phrase, it wakes up and is ready to perform tasks.

There are a number of possible outcomes in a voice-based wakeup system:
1) Correct Accept (CA), in which the user speaks a wakeup phrase, and the device correctly recognizes it.
2) False Accept (FA) is when non-wakeup audio is recognized as a wakeup, and the device falsely wakes up.
3) Correct Reject (CR) is when the non-wakeup audio is correctly rejected.
4) False Reject (FR) is when the system fails to recognize a wakeup request from the user.

One of the challenges of voice-based wakeup systems is that the ratio of wakeup audio to background can be very small. For example, in a typical scenario, a system can be listening for several hours, before a single wakeup is issued. For the single instance of wakeup audio that needs to be detected, there are several hours of background audio that must be rejected. Such voice-based wakeup systems are tuned to reject aggressively to minimize false accepts (FAs). Anything that does not closely match the acoustic signature of the wakeup phrase is rejected. However, this can potentially result in high false-reject (FR) rates, especially for non-native users, or in noisy conditions, as the acoustic signature of the wakeup phrase may not closely match the one in the acoustic model.

It is known that acoustic model adaptation to the target user yields a significant reduction in FRs. In many current systems using voice-based wakeup, acoustic model adaptation takes place during a supervised user enrollment session. In supervised enrollment, the system prompts the user to speak a particular wakeup phrase a few times (typically three). Using the audio examples provided by the user, the system adapts the recognition models, improving the wakeup performance significantly for that user. This adaptation is supervised in the sense that the user speaks the phrase prompted by the system. (In addition, an automatic rejection scheme will prevent the system from triggering on non-speech events.)

However, a supervised enrollment method such as this has various limitations. For example, it requires explicit user interaction with the device, which may not be preferred by all users. On some devices, the interface required may not be present. In addition, supervised enrollment is feasible only on a small set of phrases. Enrolling on many phrases to obtain the gain from speaker adaptation on these may be relatively user unfriendly and time consuming. Further, supervised enrollment often happens in a single session and captures only a single acoustic environment, and the gains are greatest for matched acoustic conditions, i.e., if a user enrolled using a specific prosody, or in specific noise conditions, then the enrolled models will not perform as well on mismatched conditions. That is, if the enrollment happened in a quiet environment and the user tries to wake the system in a noisy car, the wake-up may not work as well as in a quiet, clean environment. Supervised enrollment may also be clumsy when multiple users need to be enrolled such as for a TV, where multiple family members may use the system.

Prior Art Document US2005071161 discloses verifying two speech signals including comparing scores of a first and second word against two thresholds and considering the time between the words.

### SUMMARY

Embodiments of the invention provide methods and apparatus for unsupervised user adaptation according to the independent claims.

### BRIEF DESCRIPTION OF THE DRAWINGS

The foregoing features of this invention, as well as the invention itself, may be more fully understood from the following description of the drawings in which:
FIG. 1 is a schematic representation of a system having unsupervised wakeup;
FIG. 1A illustrates generic acoustic model states and user-specific acoustic model states;
FIG. 2A is a graphical representation of thresholds for a wakeup event and a wakeup candidate;
FIG. 2B is a graphical representation of first and second wakeup candidates over time;
FIG. 3a is a graphical representation of score versus time with a first wakeup candidate;
FIG. 3b is a flow diagram showing a sequence of steps for processing a first type of acoustic event;
FIG. 3c is a graphical representation of score versus time with first and second wakeup candidates;
FIG. 3d is a flow diagram showing a sequence of steps for processing a second type of event for unsupervised wakeup with wakeup candidates correlated in time and acoustically similar;
FIG. 3e is a graphical representation of score versus time with first and second wakeup candidates;
FIG. 3f is a flow diagram showing a sequence of steps for processing a third type of event for unsupervised wakeup;
FIG. 4 shows a schematic representation of an illustrative implementation of unsupervised wakeup; and
FIG. 5 is a schematic representation of an illustrative computer that can perform at least a portion of the processing described herein.

### DETAILED DESCRIPTION

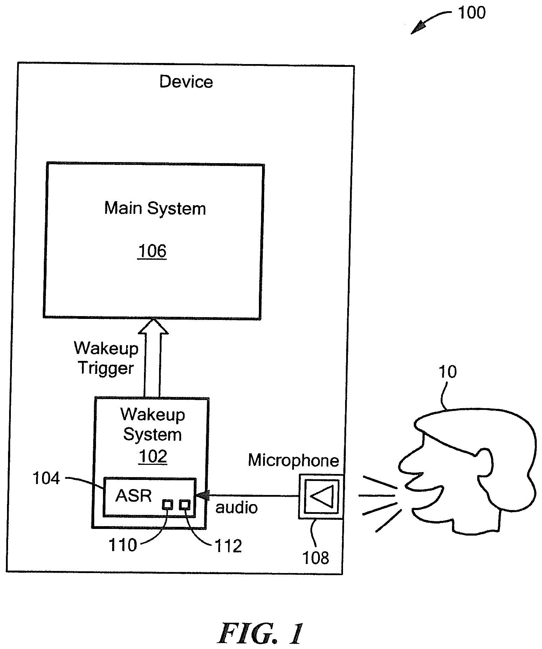

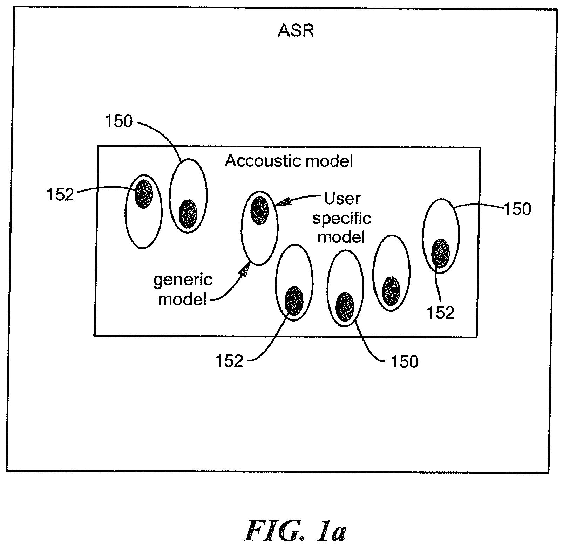

FIG. 1 shows an illustrative high level architecture of a system 100 having an unsupervised wakeup system 102. In one embodiment, a relatively small, low power wakeup system on the device contains an automatic speech recognition (ASR) system 104 that is continuously listening to the ambient audio for a wakeup phrase. Upon detecting a wakeup phrase, a wakeup circuit wakes up the main system 106. For example, if the wakeup phrase is "Hello Dragon," then a user 10 of the device may say "Hello Dragon, call home," which is provided to the wakeup system 102 via a microphone 108. The device 100 wakes up upon receiving the wakeup phrase (Hello Dragon) and then executes the voice command ("call home") from the user.

The ASR module 104 provides voice-based wakeup functionality using an acoustic module 110 and a language module 112 to recognize speech in a manner well known in the art. In general, when a wakeup phrase is received by the device, the corresponding character string is converted to a sequence of phonemes. For each phoneme, the processing module 102 identifies neighboring phonemes to create a tri-phone that is converted into a sequence of states. Each tri-phone has a model for a sequence of acoustic states. Generally, a given tri-phone model has two or a few states: a beginning and an end, or a beginning, a middle, and an end. The result is a set of acoustic model states used for look-up in the acoustic model for scoring. Tri-phones are mapped to acoustic models or acoustic model states, thereby creating a sequence.

FIG. 1A illustrates generic acoustic model states 150 and user-specific acoustic model states 152. A given user only uses a small fraction of the generic models 150. In the generic model, the model parameters are used to model a wider parameter space so that sometimes the acoustics for a user are not modeled properly. In the adapted models 152, the same number of parameters as generic models are used to model only the acoustic space of the user, thus yielding a better and more robust model for that user.

In supervised adaptation, i.e., enrollment, the user is asked to speak the wakeup phrase a few, e.g., three, times. The ASR system processes the utterances and estimates the user-specific models 152. In accordance with illustrative embodiments of unsupervised adaptation, rather than asking the user to specifically provide these utterances, the system automatically identifies the wakeup utterances from user's normal usage of the wakeup system and adapts the models.

In general, adaptation helps most for users whose voice poorly matches the acoustic models e.g. non-native users. One challenge to adapt on such users is that their scores are relatively low so that it may be difficult to isolate correct utterances from noise. If the system mistakenly chooses an incorrect utterance on which to adapt, the system may corrupt the models, thus degrading performance further.

One reason why it is relatively simple to implement an algorithm for unsupervised adaptation for wakeup (as opposed to dictation, for example) is that the same wakeup phrase is repeated by the user, so that acoustic similarity can be used to isolate correct wakeups from background noise. Another reason is that adapting on only a few utterances, e.g. three or fewer, yields most of the gain. Thus, the task of unsupervised adaptation narrows down to identifying a few candidate wakeup utterances with high precision.

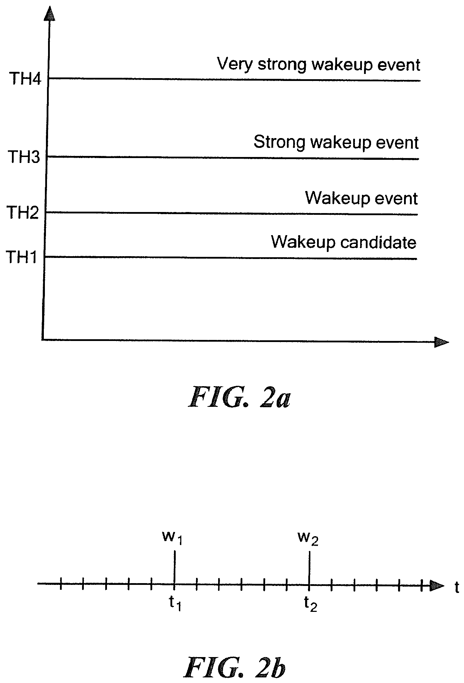

FIG. 2A shows four thresholds as applied to a wakeup score used in an illustrative embodiment of a system, defined as follows:
- TH2 is the threshold for triggering a wakeup of the system.
- TH1 is a threshold lower than TH2. Any event with confidence higher than TH1 but lower than TH2 will not (by itself) trigger a wakeup, but is still considered a candidate for use in unsupervised adaptation (and in other algorithms that consider acoustic similarity between wakeup instances). We call this an "almost wakeup."
- TH3 is a threshold above TH2, set high enough to eliminate a significant fraction of the FAs without impacting seriously the FR rate.
- TH4 is a threshold above TH3, set high enough to eliminate virtually all FAs, potentially increasing the FR rate to a level that would be unacceptable as a wakeup threshold.
A set of thresholds can be defined that meet these criteria.

In general, there are three situations that indicate with sufficiently high confidence that the utterance is a wakeup utterance, i.e., a wakeup event.
S1: A single "very strong" wakeup instance, with very high confidence (with score higher than TH4)
S2: One "almost wakeup" (defined above as a low confidence event, with score above TH1 but below TH2), followed by another almost or actual wakeup, where these two instances are additionally close together in time and acoustically similar.
S3: Two consecutive "strong" wakeups, with scores higher than TH3, which are acoustically similar to each other.

Acoustic similarity is a measure of how acoustically close are two recognized wakeups to each other. Consider two wakeup instances, W1 and W2. Acoustic similarity between W1 and W2 can be estimated in various ways. One way is to estimate the gain in the score of W1 when the acoustic models are adapted on W2. If W1 and W2 are indeed wakeup phrases spoken by the same user, there will be a significant improvement in score. (If either of these instances is a false accept, there is no expectation that the score will improve.)

In the case of S2, it is observed that in general, false triggers of the wakeup system are rarely acoustically similar to each other or appear close together in time. That is, a device will rarely receive acoustic events relatively close in time that are similar to each other, but not in fact the wakeup phrase. In real world scenarios, exceptions to this are quite rare - maybe once in hundreds of hours of background audio. However, if a user attempts to wake the system and does not receive a response from the device, the user will typically repeat the wakeup phrase within a few seconds, such as between three and fifteen seconds. That is, the initial user utterance and the repeated utterance of the wakeup phrase show up as wakeup candidates appearing close together in time and that are acoustically similar. This correlation can be used to reduce the likelihood of false adaptation occurring to a very low rate. Optionally, this method can be used to accurately detect a low confidence wakeup without performing acoustic model adaptation.

FIG. 2B shows a first wakeup candidate W1 at time t1 that is between the first and second thresholds TH1, TH2 of FIG. 2A and a second wakeup candidate W2 at time t2 that is also between the first and second thresholds TH1, TH2. If the first and second wakeup candidates W1, W2 are within a given time interval, and are acoustically similar, then the system can adapt on the first and/or second wakeup candidate, as described more fully below.

It is understood that additional thresholds can be used for each sequential wakeup candidate and/or event to meet the needs of a particular application. In one embodiment, the threshold to determine receipt of a second wakeup candidate can be lower or higher than the second threshold TH2. In addition, after receiving a first wakeup candidate, an event threshold can be adjusted up or down for a second wakeup candidate.

S2 can be extended to a more general form. If there are multiple wakeup candidates within a time window from a current wakeup candidate, with wakeup scores greater than TH1 and less than TH2, then the system can wakeup and/or adapt on some or all the candidates.

Additionally, we can introduce acoustic similarity. If there are at least N wakeup candidates within a time window from the current wakeup candidate, which are acoustically similar to the current wakeup candidate, the system can wakeup and/or adapt on these candidates.

In a real time system, the system can wakeup only for the current candidate; but it can adapt using all the selected candidates. In a non real time system, it can either wakeup or adapt for all the selected candidates.

In case of S3, it is found that a significant fraction of wakeup utterances from most users are strong wakeups (wakeup score above TH3) whereas only a very small fraction of FAs are strong wakeups. Additionally, it is highly likely for a strong wakeup acoustically similar to a previous strong wakeup to be a correct wakeup than a FA. Hence, the probability of S3 identifying a correct wakeup rather than an incorrect wakeup is extremely high.

In a more general form, S3 can use a variable number of previous "strong" wakeups. In this case, N, previous "strong" wakeups above TH3 are selected. If the current "strong" wakeup is acoustically similar to at least a pre-determined number or fraction of these N wakeups, then the system can adapt on a those "strong" wakeups.

In case of S1, it is found that an FA is rarely a very strong wakeup. Moreover, it is also found that a significant portion of the correct wakeup utterances meet this criterion. Thus S1 also identifies correct wakeup utterances with very high precision.

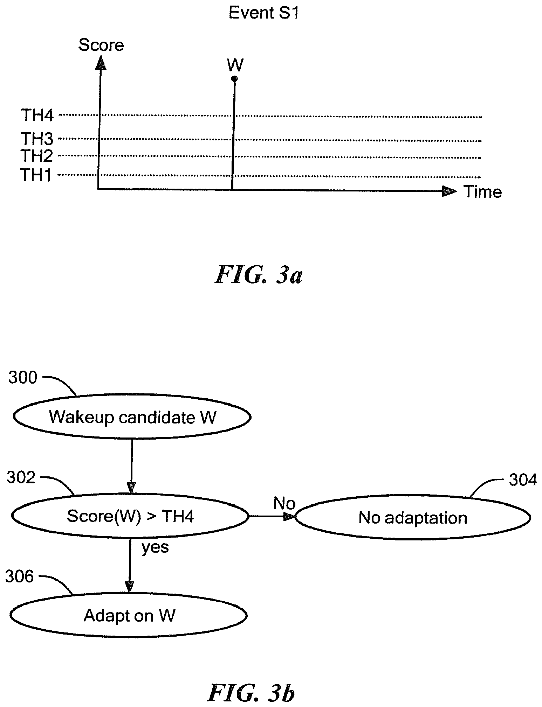

FIG. 3a shows a wakeup candidate W with a score above TH4. FIG. 3b shows an illustrative processing sequence for the wakeup candidate. In step 300, the wakeup candidate W is received. In step 302, it is determined whether the score for the wakeup candidate W is above threshold TH4. If the score is lower than TH4, no adaptation is performed in step 304. Otherwise, in step 306, the acoustic models are adapted on the wakeup candidate W.

The system continuously listens for a region of speech, or utterance. For each such utterance a score is generated, which measures how closely the utterance matches the acoustic models for the given wakeup phrase. For wakeup applications, a second score is generated, using a model for general speech. The difference between these two scores is referred to as the "wakeup score", and it measures how confident the system is that it has detected the wakeup phrase. Typically, a threshold is set such that any utterance with a score exceeding this threshold triggers a wakeup event.

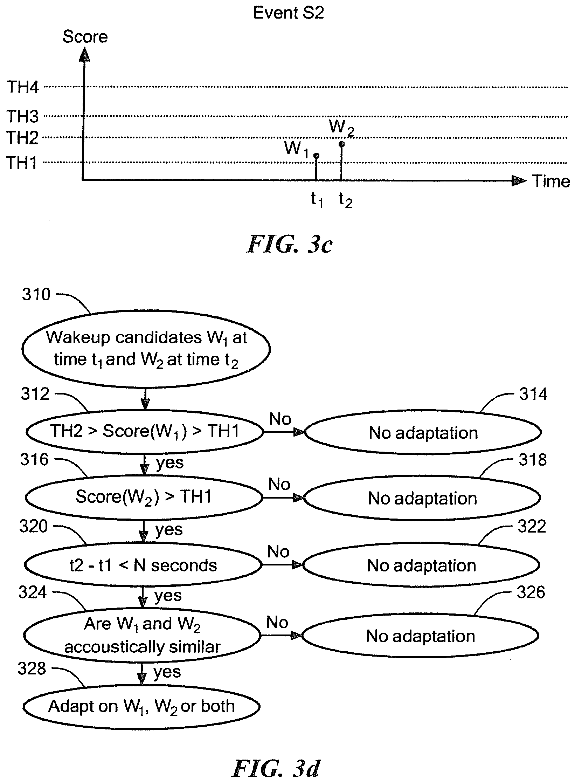

FIG. 3c shows a first wakeup candidate W1 at time t1 and a second wakeup candidate W2 at time t2. The first and second wakeup candidates W1, W2 have a score above TH1. In the illustrated embodiment, thresholds TH1, TH2, TH3, and TH4 are shown. It is understood that any practical number of thresholds can be used to meet the needs of a particular application.

FIG. 3d shows illustrative processing for first and second wakeup candidates W1, W2 for a S2 event. In step 310, a first wakeup candidate W1 is received at time t1 and a second wakeup candidate W2 is received at time t2. In step 312, it is determined whether the score for the first wakeup candidate W1 is between TH1 and TH2. If not, in step 314 no adaptation is performed. If so, in step 316 it is determined whether the score for the second wakeup candidate W2 is greater than TH1. If not, no adaptation is performed in step 318. If so, in step 320 it is determined whether the first and second wakeup candidates W1, W2 are correlated in time, e.g., whether t2 ―t1 < N. In general, the time interval N might be from about three to about fifteen seconds. If not, in step 322 no adaptation is performed since a wakeup phrase has apparently not been detected. If so, in step 324, it is determined whether the first and second wakeup candidates are acoustically similar. If not, in step 326, no adaptation is performed. If so, in step 328 the system adapts on the first and/or second wakeup candidates W1, W2. In one embodiment, the acoustic model adapts on the lower scoring of the first and second wakeup candidates (that is, the candidate which is a poorer match to the existing model). In general, the system adapts on first and/or second wakeup candidates which are above a given threshold, acoustically similar, and correlated in time.

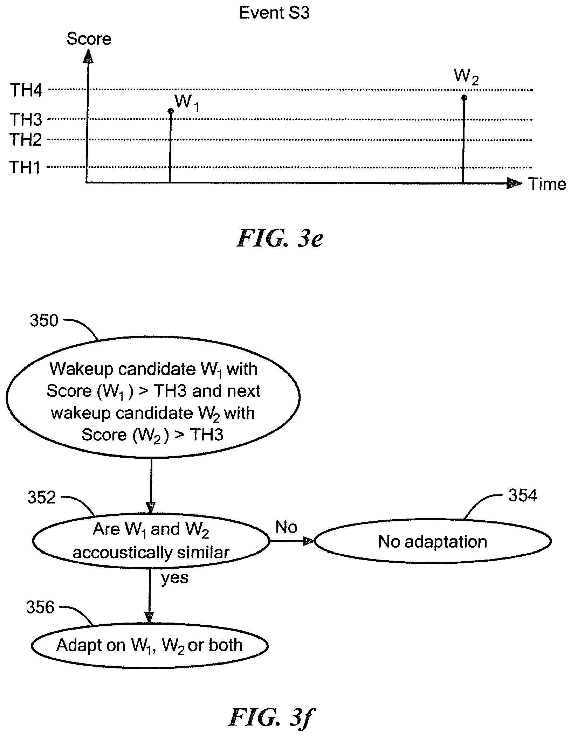

FIG. 3e shows first and second wakeup candidates W1 at time t1 and W2 at time t2. W1 and W2 may or may not be correlated in time, e.g., the first and second wakeup candidates may be several minutes or hours apart. The first and second wakeup candidates W1, W2 have relatively high scores, shown as above TH3 and below TH4.

FIG. 3f shows an exemplary sequence of steps to process relatively strong wakeup candidates, e.g., an S3 event. In step 350, a first wakeup candidate W1 is received at time t1 and a second wakeup candidate W2 is received at time t2, with W1 and W2 above threshold TH3. It is understood that the same or different thresholds can be used to define relatively strong wakeup candidates. In step 352, it is determined whether the first and second wakeup candidates W1, W2 are acoustically similar. If not, in step 354 no adaptation is performed. If so, in step 356, the system adapts on W1 and/or W2.

It is understood that upon detecting a wakeup event, a signal may, or may not, be generated to wakeup the device. For example, a user setting may be set to prevent wakeup events from waking up a device at certain hours of the day as part of a parental control setting. It will be appreciated that a variety of conditions may exist under which detection of a wakeup event may not result in a wakeup of a device.

By looking for correlation in time between marginal wakeup candidates, the system can improve detection of low confidence wakeups that may be difficult to detect by scores alone. For example, in a noisy environment, a user can utter a wakeup phrase that scores between event and candidate thresholds. If the user again speaks the wakeup phrase in the same noisy environment, the system can correctly identify the wakeup phrase using correlation in time. In addition, the system can adapt on the wakeup phrase to improve performance in that environment.

While false adaptations rarely score above an event threshold, even after a single correct adaptation, recognition scores of most subsequent correct wakeups are significantly above a relatively high threshold. This enables the system to keep on adapting on correct wakeup utterances so as to offset degradation from an occasional false adaptation.

In general, adaptation is relatively tolerant to contamination from false adaptation as long as the ratio of incorrect to correct adaptations ratio remains low, e.g. lower than about one time in four. Occasional incorrect adaptation in the scheme described above does not significantly degrade the acoustic models.

In another embodiment, the acoustic models can learn acoustics for multiple users, pronunciation variation, acoustic backgrounds, and the like. Usually when the acoustic model adapts on the wakeup phrase, the scores of subsequent wakeups from that user improve significantly. However, if the system detects either Events S2 or S3 again after adaptation, it may signify a new user or mismatched acoustics, and the system can adapt again. Thus, multiple users can be adapted on. We have seen that a given system can adapt on a new user without degrading performance on previously adapted users.

It is understood that embodiments of the invention can be implemented in a wide variety of device and configurations. For example, a battery powered mobile phone typically includes two processors, such as a main/primary processor and a secondary/digital signal processor (DSP). The main processor handles the bulk of the processing during active use of the phone, such as phone calls, utility applications, email, games, and the like. In one embodiment, the DSP is used to provide computation at low power. For example, the DSP is active and listens for incoming phone calls while the phone is in a standby mode or not actively being used.

In one embodiment, unsupervised wakeup functionality runs on two separate speech recognition systems on a device. A first speech system, which is relatively large, runs on the main processor of a device, and a second speech system, which is comparatively smaller, runs on the DSP. The first speech system can include a full set of speech recognition models for a particular mobile application, such as for recognizing commands to access contacts, email, songs, perform tasks, and run applications. This full set of models enables a user to be able to select a custom phrase or word for use as a spoken wakeup phrase.

The first speech system receives a wakeup phrase and uses this phrase to convert speech models and code to a relatively small system for use on the DSP. That is, the main processor pre-computes the smaller speech system, which can include a network of recognition states and acoustic model information. The network of recognition states can be used by a decoder that searches for a best path through a sequence of states. The acoustic model information can include measurements from recordings of speech.

Embodiments can function well with a relatively small subset of acoustic model information used for the DSP wake-up feature. These two parts are combined together into a system that is small compared to the main processor voice recognition system.

The recognizer on the DSP then functions as a wakeup phrase detector. For example, the recognizer essentially determines whether a wakeup candidate was received. Once the DSP recognizer determines that a wakeup phrase has been uttered, the main processor recognizer becomes active. An exemplary multi-processor wakeup implementation is shown and described in U.S. Patent Publication No. 2013/028 9994.

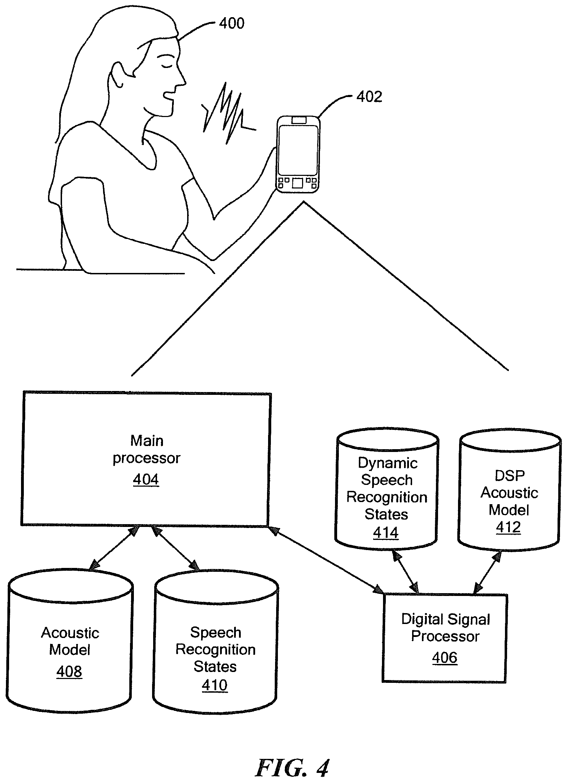

FIG. 4 shows a multi-processor implementation of wakeup functionality in accordance with illustrative embodiments of the invention. A user 400 operates an electronic device 402 having voice command functionality including a wakeup feature. The user 400 can input a particular wakeup phrase. After the user 400 enters the wakeup phrase, a main processor 404 creates a speech recognition system or state for use by a digital signal processor 406. The main processor 404 can access an acoustic model 408 and speech recognition states 410 while generating data for the wakeup functionality. The main processor 406 can gather acoustic model data from speaker-independent acoustic model 408 for use as a secondary acoustic model 412. The DSP 406 can then receive this data and store it as dynamic speech recognition states 414. During speech recognition, the DSP 406 can access both the speech recognition states 414 and the secondary acoustic model 412. The recognition feature on the DSP 406 can run while the main processor 404 is inactive, on standby, etc. After the DSP 406 detects a candidate wakeup phrase, the DSP signals the main processor 404 to become active.

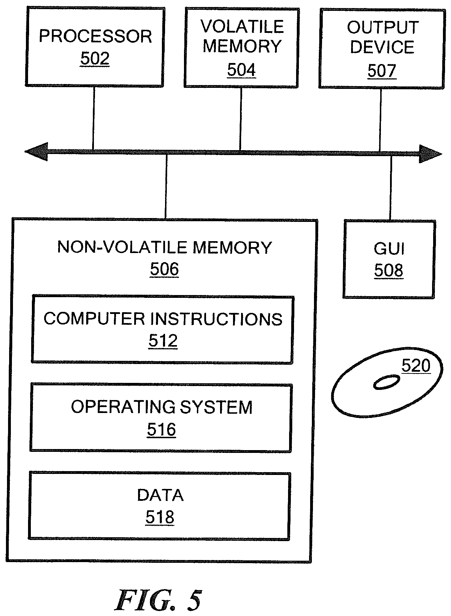

FIG. 5 shows an exemplary computer 500 that can perform at least part of the processing described herein. The computer 500 includes a processor 502, a volatile memory 504, a non-volatile memory 506 (e.g., hard disk), an output device 507 and a graphical user interface (GUI) 508 (e.g., a mouse, a keyboard, a display, for example). The non-volatile memory 506 stores computer instructions 512, an operating system 516 and data 518. In one example, the computer instructions 512 are executed by the processor 502 out of volatile memory 504. In one embodiment, an article 520 comprises non-transitory computer-readable instructions.

Processing may be implemented in hardware, software, or a combination of the two. Processing may be implemented in computer programs executed on programmable computers/machines that each includes a processor, a storage medium or other article of manufacture that is readable by the processor (including volatile and non-volatile memory and/or storage elements), at least one input device, and one or more output devices. Program code may be applied to data entered using an input device to perform processing and to generate output information.

The system can perform processing, at least in part, via a computer program product, (e.g., in a machine-readable storage device), for execution by, or to control the operation of, data processing apparatus (e.g., a programmable processor, a computer, or multiple computers). Each such program may be implemented in a high level procedural or object-oriented programming language to communicate with a computer system. However, the programs may be implemented in assembly or machine language. The language may be a compiled or an interpreted language and it may be deployed in any form, including as a stand-alone program or as a module, component, subroutine, or other unit suitable for use in a computing environment. A computer program may be deployed to be executed on one computer or on multiple computers at one site or distributed across multiple sites and interconnected by a communication network. A computer program may be stored on a storage medium or device (e.g., CD-ROM, hard disk, or magnetic diskette) that is readable by a general or special purpose programmable computer for configuring and operating the computer when the storage medium or device is read by the computer. Processing may also be implemented as a machine-readable storage medium, configured with a computer program, where upon execution, instructions in the computer program cause the computer to operate.

Processing may be performed by one or more programmable processors executing one or more computer programs to perform the functions of the system. All or part of the system may be implemented as, special purpose logic circuitry (e.g., an FPGA (field programmable gate array) and/or an ASIC (application-specific integrated circuit)). Having described exemplary embodiments of the invention, it will now become apparent to one of ordinary skill in the art that other embodiments incorporating their concepts may also be used. The embodiments contained herein should not be limited to disclosed embodiments but rather should be limited only by the scope of the appended claims.

## Claims

1. A method, comprising:
receiving (310) a first acoustic event (W1) at a first time (t1) and a second acoustic event (W2) at a second time (t2), the acoustic events having scores calculated based on how closely the acoustic events match an acoustic model, wherein the first and second acoustic events have scores above a first threshold (TH1) identifying the first and second acoustic events as wakeup candidates for a wakeup phrase for an unsupervised wakeup of a device;
determining (312) that the first acoustic event score is below a second threshold (TH2), which is higher than the first threshold (TH1); and
determining (320) whether the first and second acoustic events are correlated in time, by determining whether a difference between the first (t1) and second (t2) times is within a predetermined time range (N);
determining whether the first and second acoustic events are acoustically similar by estimating what a gain in the score of the first acoustic event will be when the acoustic model is adapted based on the second acoustic event;
determining (324) that a wakeup event has occurred based on whether the first (W1) and second (W2) acoustic events are correlated in time and on the acoustic similarity determination; and
adapting (328) the acoustic model in response to the first and/or second acoustic event based on the acoustic similarity determination of the first and second acoustic events.

2. The method according to claim 1, further including adapting the acoustic model corresponding to the one of the first or second acoustic events having a lower score.

3. The method according to claim 1, wherein an upper limit of the range is less than or equal to about fifteen seconds.

4. The method according to claim 1, wherein a lower limit of the range is greater than or equal to about three seconds.

5. The method according to claim 1, further including receiving at least a third acoustic event above the first threshold and below the second threshold within the range to determine that the wakeup event has occurred.

6. The method according to claim 5, further including determining acoustic similarity of the at least a third acoustic event with at least one of the first and second acoustic events to determine that the wakeup event has occurred.

7. A method, comprising:
receiving (350) a first acoustic event (W1) at a first time (t1) and a second acoustic event (W2) at a second time (t2), the acoustic events having scores calculated based on how closely the acoustic events match an acoustic model, wherein scores of the first (W1) and second (W2) acoustic events are above a first threshold (TH1) identifying the first (W1) and second (W2) acoustic events as wakeup candidates for a wakeup phrase for an unsupervised wakeup of a device;
determining that the first acoustic event (W1) score is above a second threshold (TH2), which is higher than the first threshold (TH1);
determining that the second acoustic event (W2) score is above a third threshold (TH3), which is higher than the first threshold (TH1);
determining (352) whether the first (W1) and second (W2) acoustic events are acoustically similar by estimating what a gain in the score of the first acoustic event will be when the acoustic model is adapted based on the second acoustic event;
determining that a wakeup event has occurred based upon the determination of acoustic similarity of the acoustic events; and
adapting (356) the acoustic model in response to the first (W1) and/or second (W2) acoustic event based on the acoustic similarity determination.

8. The method according to claim 7, further including adapting the acoustic model corresponding to the one of the first or second acoustic events having a lower score.

9. The method according to claim 1 or 7, further including using a main processor and a lower power processor to provide the unsupervised wakeup.

10. The method according to claim 9, wherein the lower power processor identifies the first wakeup candidate.

11. An article, comprising:
a non-transitory computer readable medium having stored instructions that enable a machine to carry out the method of any of claims 1 to 6.

12. An article, comprising:
a non-transitory computer readable medium having stored instructions that enable a machine to carry out the method of any of claims 7 to 10.

13. A system, comprising:
a processor and a memory configured to carry out the method of any of claims 1 to 6.

14. A system, comprising:
a processor and a memory configured to carry out the method of any of claims 7 to 10.

## Patentansprüche

1. Verfahren, umfassend:
Empfangen (310) eines ersten akustischen Ereignisses (W1) zu einem ersten Zeitpunkt (t1) und eines zweiten akustischen Ereignisses (W2) zu einem zweiten Zeitpunkt (t2), wobei die akustischen Ereignisse Bewertungen aufweisen, die basierend darauf berechnet werden, wie eng die akustischen Ereignisse mit einem akustischen Modell übereinstimmen, wobei das erste und das zweite akustische Ereignis Bewertungen oberhalb eines ersten Schwellenwerts (TH1) aufweisen, der das erste und das zweite akustische Ereignis als Aufweckkandidaten für eine Aufweckphrase für ein unbeaufsichtigtes Aufwecken einer Vorrichtung identifizieren;
Bestimmen (312), dass die Bewertung des ersten akustischen Ereignisses unterhalb eines zweiten Schwellenwerts (TH2) liegt, der höher ist als der erste Schwellenwert (TH1); und
Bestimmen (320), ob das erste und das zweite akustische Ereignis zeitlich korreliert sind, durch Bestimmen, ob eine Differenz zwischen dem ersten (t1) und dem zweiten (t2) Zeitpunkt innerhalb eines vorbestimmten Zeitbereichs (N) liegt;
Bestimmen, ob das erste und das zweite akustische Ereignis akustisch ähnlich sind, durch Schätzen, wie eine Steigerung der Bewertung des ersten akustischen Ereignisses ausfallen wird, wenn das akustische Modell basierend auf dem zweiten akustischen Ereignis angepasst wird;
Bestimmen (324), dass ein Aufweckereignis aufgetreten ist, basierend darauf, ob das erste (W1) und das zweite (W2) akustische Ereignis zeitlich korreliert sind, und auf der Bestimmung der akustischen Ähnlichkeit; und
Anpassen (328) des akustischen Modells in Reaktion auf das erste und/oder das zweite akustische Ereignis basierend auf der Bestimmung der akustischen Ähnlichkeit des ersten und des zweiten akustischen Ereignisses.

2. Verfahren nach Anspruch 1, das ferner ein Anpassen des akustischen Modells entsprechend dem einen von dem ersten oder dem zweiten akustischen Ereignis, das eine niedrigere Bewertung aufweist, beinhaltet.

3. Verfahren nach Anspruch 1, wobei ein oberer Grenzwert des Bereichs kleiner als oder gleich etwa fünfzehn Sekunden ist.

4. Verfahren nach Anspruch 1, wobei ein unterer Grenzwert des Bereichs größer als oder gleich etwa drei Sekunden ist.

5. Verfahren nach Anspruch 1, das ferner ein Empfangen zumindest eines dritten akustischen Ereignisses oberhalb des ersten Schwellenwerts und unterhalb des zweiten Schwellenwerts innerhalb des Bereichs beinhaltet, um zu bestimmen, dass das Aufweckereignis eingetreten ist.

6. Verfahren nach Anspruch 5, das ferner ein Bestimmen der akustischen Ähnlichkeit des zumindest einen dritten akustischen Ereignisses mit zumindest einem von dem ersten und dem zweiten akustischen Ereignis beinhaltet, um zu bestimmen, dass das Aufweckereignis eingetreten ist.

7. Verfahren, umfassend:
Empfangen (350) eines ersten akustischen Ereignisses (W1) zu einem ersten Zeitpunkt (t1) und eines zweiten akustischen Ereignisses (W2) zu einem zweiten Zeitpunkt (t2), wobei die akustischen Ereignisse Bewertungen aufweisen, die basierend darauf berechnet werden, wie eng die akustischen Ereignisse mit einem akustischen Modell übereinstimmen, wobei Bewertungen des ersten (W1) und des zweiten (W2) akustischen Ereignisses oberhalb eines ersten Schwellenwerts (TH1) liegen, der das erste (W1) und das zweite (W2) akustische Ereignis als Aufweckkandidaten für eine Aufweckphrase für ein unbeaufsichtigtes Aufwecken einer Vorrichtung identifiziert;
Bestimmen, dass die Bewertung des ersten akustischen Ereignisses (W1) oberhalb eines zweiten Schwellenwerts (TH2) liegt, der höher ist als der erste Schwellenwert (TH1);
Bestimmen, dass die Bewertung des zweiten akustischen Ereignisses (W2) oberhalb eines dritten Schwellenwerts (TH3) liegt, der höher ist als der erste Schwellenwert (TH1);
Bestimmen (352), ob das erste (W1) und das zweite (W2) akustische Ereignis akustisch ähnlich sind, durch Schätzen, wie eine Steigerung der Bewertung des ersten akustischen Ereignisses ausfallen wird, wenn das akustische Modell basierend auf dem zweiten akustischen Ereignis angepasst wird;
Bestimmen, dass ein Aufweckereignis eingetreten ist, basierend auf der Bestimmung der akustischen Ähnlichkeit der akustischen Ereignisse; und
Anpassen (356) des akustischen Modells in Reaktion auf das erste (W1) und/oder das zweite (W2) akustische Ereignis basierend auf der Bestimmung der akustischen Ähnlichkeit.

8. Verfahren nach Anspruch 7, das ferner ein Anpassen des akustischen Modells entsprechend dem einen von dem ersten oder dem zweiten akustischen Ereignis, das eine niedrigere Bewertung aufweist, beinhaltet.

9. Verfahren nach Anspruch 1 oder 7, das ferner ein Verwenden eines Hauptprozessors und eines Prozessors mit geringerer Leistung zum Bereitstellen des unbeaufsichtigten Aufweckens beinhaltet.

10. Verfahren nach Anspruch 9, wobei der Prozessor mit geringerer Leistung den ersten Aufweckkandidaten identifiziert.

11. Gegenstand, umfassend:
ein nichtflüchtiges computerlesbares Medium mit gespeicherten Anweisungen, die es einer Maschine ermöglichen, das Verfahren nach einem der Ansprüche 1 bis 6 durchzuführen.

12. Gegenstand, umfassend:
ein nichtflüchtiges computerlesbares Medium mit gespeicherten Anweisungen, die es einer Maschine ermöglichen, das Verfahren nach einem der Ansprüche 7 bis 10 durchzuführen.

13. System, umfassend:
einen Prozessor und einen Speicher, die konfiguriert ist, das Verfahren nach einem der Ansprüche 1 bis 6 durchzuführen.

14. System, umfassend:
einen Prozessor und einen Speicher, die konfiguriert sind, das Verfahren nach einem der Ansprüche 7 bis 10 durchzuführen.

## Revendications

1. Procédé, comprenant :
la réception (310) d'un premier événement acoustique (W1) à un premier instant (t1) et d'un deuxième événement acoustique (W2) à un deuxième instant (t2), les événements acoustiques ayant des scores calculés sur la base de la manière dont les événements acoustiques concordent étroitement à un modèle acoustique, dans lequel les premier et deuxième événements acoustiques ont des scores supérieurs à un premier seuil (TH1) identifiant les premier et deuxième événements acoustiques comme candidats de réveil pour une phrase de réveil pour un réveil non supervisé d'un dispositif ;
la détermination (312) que le premier score d'événement acoustique est inférieur à un deuxième seuil (TH2), qui est supérieur au premier seuil (TH1) ; et
le fait de déterminer (320) si les premier et deuxième événements acoustiques sont corrélés dans le temps, en déterminant si une différence entre les premier (t1) et deuxième (t2) temps est dans une plage de temps prédéterminée (N) ;
le fait de déterminer si les premier et deuxième événements acoustiques sont acoustiquement similaires en estimant quel sera un gain dans le score du premier événement acoustique lorsque le modèle acoustique est adapté sur la base du deuxième événement acoustique ;
la détermination (324) qu'un événement de réveil s'est produit sur la base du fait que les premier (W1) et deuxième (W2) événements acoustiques sont corrélés ou non dans le temps et sur la détermination d'une similitude acoustique ; et
l'adaptation (328) du modèle acoustique en réponse au premier et/ou au deuxième événement acoustique sur la base de la détermination d'une similitude acoustique des premier et deuxième événements acoustiques.

2. Procédé selon la revendication 1, comprenant en outre l'adaptation du modèle acoustique correspondant à celui des premier ou deuxième événements acoustiques ayant un score inférieur.

3. Procédé selon la revendication 1, dans lequel une limite supérieure de la plage est inférieure ou égale à environ quinze secondes.

4. Procédé selon la revendication 1, dans lequel une limite inférieure de la plage est supérieure ou égale à environ trois secondes.

5. Procédé selon la revendication 1, incluant en outre la réception d'au moins un troisième événement acoustique au-dessus du premier seuil et au-dessous du deuxième seuil dans la plage pour déterminer que l'événement de réveil s'est produit.

6. Procédé selon la revendication 5, incluant en outre la détermination d'une similitude acoustique d'au moins un troisième événement acoustique avec au moins l'un des premier et deuxième événements acoustiques pour déterminer que l'événement de réveil s'est produit.

7. Procédé, comprenant :
la réception (350) d'un premier événement acoustique (W1) à un premier instant (t1) et d'un deuxième événement acoustique (W2) à un deuxième instant (t2), les événements acoustiques ayant des scores calculés sur la base de la manière dont les événements acoustiques concordent étroitement à un modèle acoustique, dans lequel les scores des premier (W1) et deuxième (W2) événements acoustiques sont supérieurs à un premier seuil (TH1) identifiant les premier (W1) et deuxième (W2) événements acoustiques comme candidats de réveil pour une phrase de réveil pour un réveil non supervisé d'un dispositif ;
la détermination que le premier score d'événement acoustique (W1) est supérieur à un deuxième seuil (TH2), qui est supérieur au premier seuil (TH1) ;
la détermination que le score du deuxième événement acoustique (W2) est supérieur à un troisième seuil (TH3), qui est supérieur au premier seuil (TH1) ;
le fait de déterminer (352) si les premier (W1) et deuxième (W2) événements acoustiques sont acoustiquement similaires en estimant quel sera un gain dans le score du premier événement acoustique lorsque le modèle acoustique est adapté sur la base du deuxième événement acoustique ;
la détermination qu'un événement de réveil s'est produit sur la base de la détermination de la similitude acoustique des événements acoustiques ; et
l'adaptation (356) du modèle acoustique en réponse au premier (W1) et/ou au deuxième (W2) événement acoustique sur la base de la détermination d'une similitude acoustique.

8. Procédé selon la revendication 7, comprenant en outre l'adaptation du modèle acoustique correspondant à celui des premier ou deuxième événements acoustiques ayant un score inférieur.

9. Procédé selon la revendication 1 ou 7, incluant en outre l'utilisation d'un processeur principal et d'un processeur de puissance inférieure pour fournir le réveil non supervisé.

10. Procédé selon la revendication 9, dans lequel le processeur de puissance inférieure identifie le premier candidat de réveil.

11. Article, comprenant :
un support non transitoire lisible par ordinateur ayant des instructions stockées qui permettent à une machine de réaliser le procédé selon l'une quelconque des revendications 1 à 6.

12. Article, comprenant :
un support non transitoire lisible par ordinateur ayant des instructions stockées qui permettent à une machine de réaliser le procédé selon l'une quelconque des revendications 7 à 10.

13. Système, comprenant :
un processeur et une mémoire configurés pour réaliser le procédé selon l'une quelconque des revendications 1 à 6.

14. Système, comprenant :
un processeur et une mémoire configurés pour réaliser le procédé selon l'une quelconque des revendications 7 à 10.
